# EUROPEAN PATENT APPLICATION

(11) **EP 1 798 944 A1**
(43) Date of publication of application: **20.06.2007**
(21) Application number: 05782088.8
(22) Date of filing: 12.09.2005
(51) Int. Cl.: H04M 3/00, G06F 11/00, G06F 13/00, H04L 12/56, H04M 11/00

(54) **SIP TERMINAL CONTROL SYSTEM**

(30) Priority: 05.10.2004 JP 2004293126
(71) Applicant: MATSUSHITA ELECTRIC INDUSTRIAL CO., LTD., Osaka 571-8501 (JP); NextGen, Inc., Tokyo 1050002 (JP)
(72) Inventor: OKA, Yoshihiro Matsushita Electric Industrial Co. Ltd, Osaka-shi, Osaka 540-6319 (JP); ONISHI, Shinji Matsushita Electric Industrial Co. Ltd, Osaka-shi, Osaka 540-6319 (JP)
(74) Representative: Grünecker, Kinkeldey, Stockmair & Schwanhäusser Anwaltssozietät
(86) International application number: PCT/JP2005/016760
(87) International publication number: WO 2006/038436

(57) **Abstract**

There is provided a SIP terminal control system capable of reporting a download request, an upgrade request, and an upload request from an IP network side to each terminal without requiring its own database for managing the IP address of each terminal or its own authentication mechanism for authentication of each terminal for terminal control. The SIP terminal control system reports various requests such as a download request, an upload request, and an upgrade request to a SIP terminal from an IP call control device (41) accommodating the SIP terminal by using the SIP, so that a database managing the IP address of each terminal and an authentication mechanism for performing authentication can utilize the existing function of the IP call control device (41) and access the SIP terminal over the firewall by using the SIP.

## Description

### Technical Field

The present invention relates to a SIP terminal control system for reporting a download request, upload request, upgrade request, or the like issued by a center system to a SIP terminal (a terminal which can be connected and controlled using SIP) via an IP network in order to download various data to the SIP terminal or upload various data from the SIP terminal.

### Background Art

Conventionally, as a system for accessing a terminal from a center side via an IP network and updating software of the terminal, a firmware distribution system for updating firmware of a mobile telephone terminal is well known (for example, refer to patent document 1). In this firmware distribution system, information such as the model name and installed firmware version for all mobile telephone terminals is held in a database of a firmware distribution server. The version of the current firmware for the specified model type of mobile telephone terminals is checked by referring to this database, and mobile telephone terminals which do not have the latest version of the firmware installed are accessed via a mobile telephone network. The firmware distribution server then transmits firmware modules for updating to the mobile telephone terminal after accessing the mobile terminal and confirming that the mobile telephone terminal is in a state where operation is possible.

Further, this is by no means limited to mobile telephone terminals, and it is also expected that equipments such as personal computers, network-connected office equipments (such as network printers and Internet faxes), network appliances (such as IP telephones and IP televisions), gateways and routers may download various data (such as software and setting data) or upload data from terminal side via an IP network. In the current situation, an equipment management server manages address information (such as IP address and telephone number) for all terminals that are the targets of management, calls and connects to each terminal one by one using the address information, and performs downloading and uploading in a state where line is connected.

When the terminal of the access destination is viewed from the equipment management server on the IP network side, if the terminal is located within a firewall, even if a download request, upgrade request and upload request try to be reported from the IP network side to the terminals, the requests are denied by the firewall. As a result, as one countermeasure, it is necessary for the equipment management server to call and connect to each terminal one by one to establish sessions.
Patent Document 1: Japanese Patent Application Laid-Open No.2003-209510.

### Disclosure of Invention

### Problems to be Solved by the Invention

However, when the equipment management server manages the address information for all terminals, since the IP addresses of the terminals will change, it is necessary to always manage the correct address information for all terminals, and there is a problem that the management load increases when the number of terminals increases.

Further, it can be considered to make the terminal side report registration information (including access information) to the equipment management server and update the access information based on the terminal information, but, in this case, an authentication mechanism is necessary to authenticate the individual terminals that report the registration information, and this causes the problem of complicating the configuration of the equipment management server side.

It is therefore an object of the present invention which resolves the situation described above, to provide a SIP terminal control system capable of reporting a download request, upgrade request and upload request to each terminal from the IP network side without independently having a database for managing the IP address of each terminal or having an authentication mechanism for authenticating each terminal for terminal control.

### Means for Solving the Problem

In the present invention, by reporting various requests for a SIP terminal, such as a download request, upload request and upgrade request, to the SIP terminal using SIP from an IP call control apparatus that accommodates the SIP terminal, it is possible to use an existing function of the IP call control apparatus as the database for managing the IP address of each terminal and an authentication mechanism for authenticating each terminal, and access a SIP terminal through a firewall by using SIP.

### Advantageous Effect of the Invention

According to the present invention, it is possible to provide a SIP terminal control system capable of reporting a download request, upgrade request and upload request to each terminal from an IP network side without independently having a database for managing the IP address of each terminal or an authentication mechanism for authenticating each terminal for terminal control.

### Brief Description of the Drawings

FIG. 1 is an overall configuration diagram of a SIP terminal control system according to one embodiment of the present invention;
FIG.2 is a sequence diagram for the case where the SIP terminal requests registration in one embodiment of the present invention;
FIG.3 is a sequence diagram for the case where the SIP terminal reports a version in one embodiment of the present invention;
FIG.4 is a sequence diagram for the case where a terminal control server requests download in one embodiment of the present invention;
FIG.5 is a sequence diagram for the case where a terminal control server requests upload in one embodiment of the present invention;
FIG.6 is a sequence diagram for the case where a terminal management server/version management apparatus requests upgrade in one embodiment of the present invention;
FIG.7 shows a system configuration example for the case where a data file recorded in a message-recording telephone of home is uploaded to a server;
FIG. 8 shows a specific example of a SUBSCRIBE request used in order to report the version information of a client terminal to a version management apparatus;
FIG.9 shows a specific example of a NOTIFY request used in order to report a download request to the client terminal;
FIG.10 shows a specific example of a SUBSCRIBE request for reporting an upload request to the client terminal from the IP call control apparatus; and
FIG.11 shows a specific example of a NOTIFY request transmitted from the client terminal to the IP call control apparatus.

### Best Mode for Carrying Out the Invention

A first aspect of the present invention is a SIP terminal control system, wherein a center system issues a download request for a terminal, an IP call control apparatus which receives the issued download request acquires address information of the terminal from an address information database, and the IP call control apparatus connects to the terminal via an IP network using this address information to report the download request.

According to a SIP terminal control system as configured above, the IP call control apparatus receives the download request for the terminal issued by the center system, connects to the terminal via an IP network and reports the download request, and therefore it is not necessary for the center system to independently have the database for managing the IP address of each terminal and an authentication mechanism for authenticating each terminal for terminal control, and the IP call control apparatus connects to the accommodated terminal, so that it is possible to access a SIP terminal through a firewall and report the download request.

It is preferable that the IP call control apparatus connects to the terminal, reports the download request to the terminal, and reports the address information of the download server to the terminal, using SIP message.

A second aspect of the present invention is a SIP terminal control system, wherein a center system issues an upload request for a terminal, an IP call control apparatus which receives the issued upload request acquires address information of the terminal from an address information database, and the IP call control apparatus connects to the terminal via an IP network using this address information to report the upload request.

According to a SIP terminal control system configured as described above, the IP call control apparatus receives the upload request for the terminal issued by the center system, connects to the terminal via an IP network and reports the upload request, and therefore it is not necessary for the center system to independently have the database for managing the IP address of each terminal and an authentication mechanism for authenticating each terminal for terminal control, and the IP call control apparatus connects to the accommodated terminal, so that it is possible to access a SIP terminal over the firewall and report the upload request.

It is preferable that the IP call control apparatus connects to the terminal, reports the upload request to the terminal, and reports the address information of the upload destination to the terminal, using SIP message.

A third aspect of the present invention is a SIP terminal control system, wherein a center system issues an upgrade request of internal software or environment files for a terminal, an IP call control apparatus which receives the issued upgrade request acquires address information of the terminal from an address information database, and the IP call control apparatus connects to the terminal via an IP network using this address information to report the upgrade request.

According to a SIP terminal control system as configured above, the IP call control apparatus receives the upgrade request for the terminal issued by the center system, connects to the terminal via an IP network and reports the upgrade request, and therefore it is not necessary for the center system to independently have the database for managing the IP address of each terminal and an authentication mechanism for authenticating each terminal for terminal control, and the IP call control apparatus connects to the accommodated terminal, so that it is possible to access a SIP terminal over a firewall and report the upgrade request.

It is preferable that the IP call control apparatus connects to the terminal, reports the upgrade request to the terminal, and reports the address information of the download server to the terminal, using SIP message.

A further aspect of the present invention is a recorded phone message data file uploading method, wherein a terminal control server issues an upload request of a recorded phone massage data file for an IP telephone, an IP call control apparatus which receives the issued upload request acquires address information of the IP telephone from an address information database, the IP call control apparatus connects to the IP telephone via an IP network using this address information to report the upload request and address information of an upload destination, and the IP telephone which receives this upload request uploads the recorded message data file to an upload server specified as the upload destination.

A still further aspect of the present invention is a reporting method including the steps of: accepting a download request for a terminal issued by a terminal control server; acquiring address information of the terminal which is the reporting destination of the received download request from an address information database of accommodated terminals; and connecting to the terminal via an IP network using this address information using SIP messages to report the download request.

A yet further aspect of the present invention is a reporting method including the steps of: accepting an upload request for a terminal issued by a terminal control server; acquiring address information of the terminal which is a report destination of the accepted upload request from an address information database of accommodated terminals; and connecting to the terminal via an IP network using this address information using SIP messages to report the upload request.

Another aspect of the present invention is a reporting method including the steps of: accepting an upgrade request of internal software or environment files for a terminal issued by a management server; acquiring address information of the terminal which is a report destination of the accepted upgrade request from an address information database of accommodated terminals; and connecting to the terminal via an IP network using this address information using SIP messages to report the upgrade request.

Embodiment of the present invention will be described in detail below with reference to the accompanying drawings.

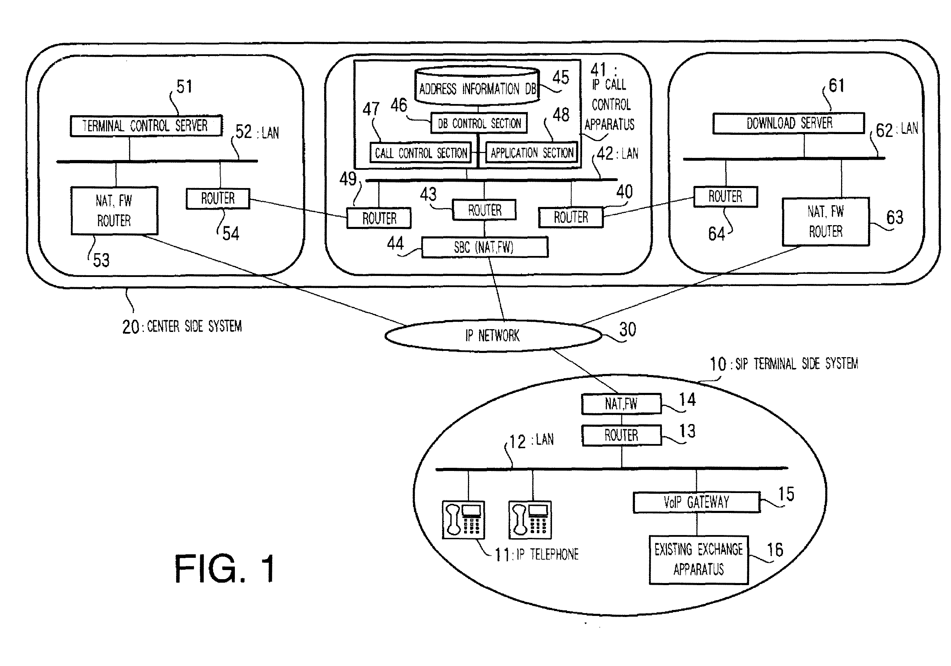

FIG.1 is an overall configuration diagram of a SIP terminal control system according to this embodiment. At SIP terminal side system 10, IP telephone 11 as a SIP terminal is connected to LAN 12, and SIP terminal side system 10 is connected to IP network 30 via router 13 and gateway 14. Gateway 14 is provided with a NAT function and a firewall function. Further, SIP terminal side system 10 is connected to existing exchange apparatus 16 via VoIP gateway 15, and may also be connected to a public switched telephone network. The SIP terminal is by no means limited to IP telephone 11, and gateway 14 connected to IP network 30 or VoIP gateway 15 connected to a public switched telephone network may also be used as a SIP terminal. Further, in FIG.1, IP telephone 11 is shown as an example of a SIP terminal, but a personal computer, network-connected office equipment (such as network printer and Internet FAX), or network appliance (such as IP television and IP video camera) may also be used as a SIP terminal.

Center side system 20 is configured with IP call control apparatus 41, terminal control server 51 and download server 61. In this embodiment, IP call control apparatus 41 and terminal control server 51, and IP call control apparatus 41 and download server 61 are connected with private lines. It is not always necessary to connect IP call control apparatus 41 and terminal control server 51 with a private line, but a secure data communication environment is preferable. Further, it is also possible to adopt a configuration where IP call control apparatus 41 and download server 61 are not included in center side system 20 and provided independently on IP network 30 and operated by the same or different carriers.

IP call control apparatus 41 is connected to IP network 30 via LAN 42 through router 43 and SBC (Session Border Controller) 44. SBC 44 has a NAT function and a firewall function for SIP and RTP. IP call control apparatus 41 has address information database 45 in which address information (IP address) of accommodated terminals such as IP telephone 11 (including such as gateways) is registered. Information (such as user ID and password) necessary for authentication is registered in address information database 45, but information used for other than call control can also be registered. For example, it is also possible to register file version information of the accommodated terminals and the state of the terminals. IP call control apparatus 41 has database control section 46 that reads out from and writes to address information database 45, call control section 47 that controls connection between SIP terminals using SIP referring to address information database 45, and application section 48 that executes various applications in addition to authentication processing for a registration request from the SIP terminal. IP call control apparatus 41 is connected with a private line to terminal control server 51 via router 49, and connected with a private line to download server 61 via router 40.

Terminal control server 51 is connected via LAN 52 from gateway 53 to IP network 30. Gateway 53 functions as a router and has a NAT function and a firewall function. Terminal control server 51 connects to the SIP terminal using a SIP connection service by IP call control apparatus 41, and reports a download request, upgrade request or upload request. This is by no means limited to report of requests, and it is also possible to access the SIP terminal from terminal control server 51 via IP network 30 and carry out various control by connecting terminal control server 51 and the SIP terminal using IP call control apparatus 41. Terminal control server 51 is connected with a private line to IP call control apparatus 41 via router 54.

Download server 61 is connected via LAN 62 from gateway 63 to IP network 30. Gateway 63 functions as a router and has a NAT function and a firewall function. Download server 61 receives a request from the terminal and downloads data for the terminal which is the source of the request. An appropriate protocol such as FTP is used in data transfer according to the data content.

At the SIP terminal control system, functions of routers 13, 40, 43, 49, 54 and 64 may also be implemented using switches.

Next, the content of operation of the SIP terminal control system according to this embodiment configured as described above will be described.

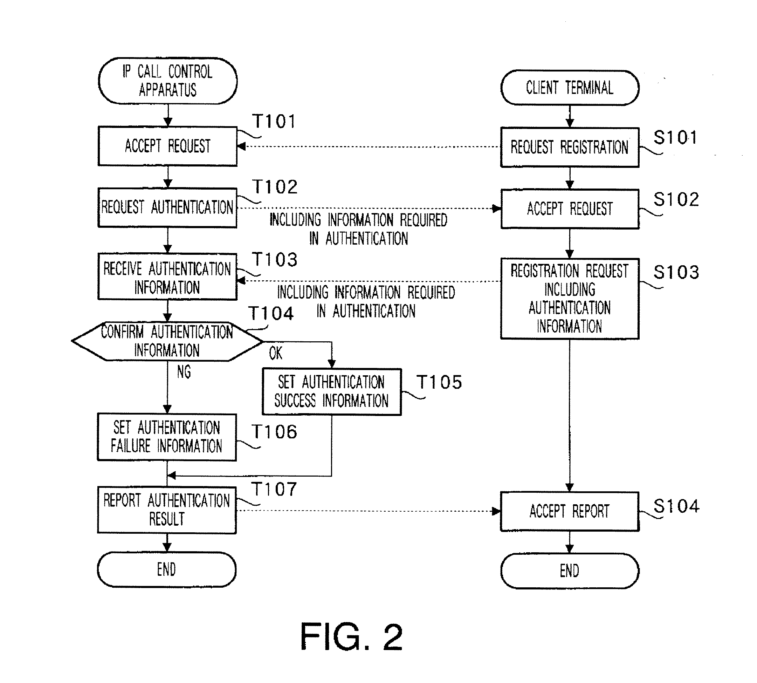

FIG.2 is a sequence diagram for the case where the SIP terminal requests registration to IP call control apparatus 41. The SIP terminal is a client which requests registration of address information to IP call control apparatus 41, and therefore is described as a client terminal in FIG.2. The client terminal is not limited to IP telephone 11 if the terminal is an equipment where SIP is implemented and IP call control apparatus 41 can connect a session. For example, VoIP gateway 15 may also be a client terminal, and personal computers, network-connected office equipment (such as network printer and Internet FAX), and net appliances (such as IP telephones and IP televisions) may also be client terminals.

A client terminal issues a registration request that requests registration of the latest information (for example, address information and user ID) of the client terminal to IP call control apparatus 41 (S101). A registration request may be periodically carried out or may be issued using some kind of event as a trigger.

IP call control apparatus 41 receives the registration request issued by the client terminal via IP network 30. IP call control apparatus 41 then accepts the received registration request (T101), and issues an authentication request to the client terminal of the request source (T102). The authentication request transmitted to the client terminal by IP call control apparatus 41 includes information necessary for authentication.

The client terminal then accepts the authentication request issued by IP call control apparatus 41 (S102), and returns the registration request including authentication information to IP call control apparatus 41 (S103). The returned authentication information includes information necessary for authentication.

Upon receiving the authentication information transmitted by the client terminal, IP call control apparatus 41 confirms the authentication information (T104). For example, IP call control apparatus 41 confirms whether or not there is matching with a password which is registered in advance by the user of the client terminal in address information database 45. If the passwords match, authentication success information is set (T105), and if the passwords do not match, authentication failure information is set (T106). The authentication results are reported to the client terminal (T107).

The client terminal then accepts the authentication results reported from IP call control apparatus 41 (S104). When the accepted authentication results indicate authentication failure, a registration request may be re-issued to try registration.

IP call control apparatus 41 then updates parts of address information database 45 using information (for example, address information and user ID) accepted in T101 for the client terminal for which authentication success information is set. As a result, the latest address information of the client terminal is registered in address information database 45. All SIP terminals (client terminals) registered in IP call control apparatus 41 periodically or irregularly issue the above-described registration requests, and thereby the address information registered in address information database 45 is updated to the latest. For example, even when the client terminal moves over access points and thereby the IP address changes, by the registration request from the client terminal, it is possible to always know the latest address information at IP call control apparatus 41.

Next, version management of software installed at SIP terminals will be described as an example of managing SIP terminals by center side system 20.

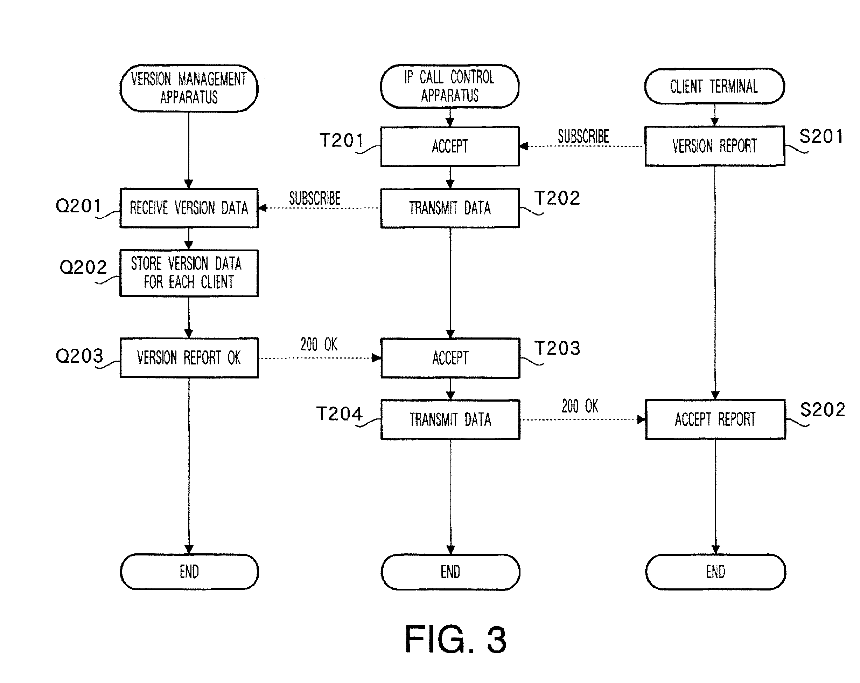

FIG.3 shows a sequence where a client terminal reports a version of the terminal to a version management apparatus. Terminal control server 51 of center side system 20 may be used as the version management apparatus, and it is also possible to adopt a system configuration where the version management apparatus is separately located on IP network 30.

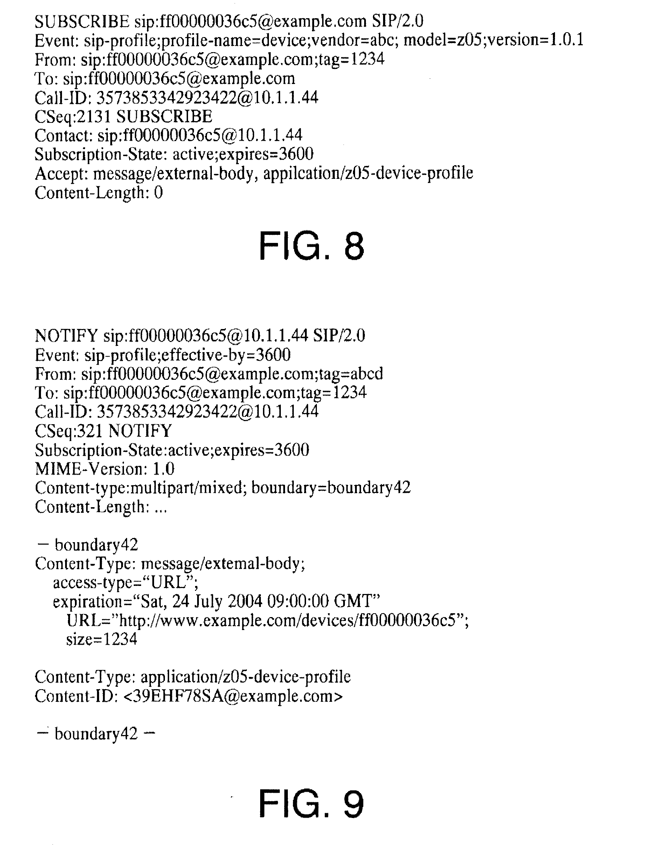

The client terminal reports version information of currently installed software to IP call control apparatus 41 periodically or using some kind of event as a trigger (S201). The client terminals and IP call control apparatus 41 communicate using SIP. Specifically, the client terminal reports version utilizing a SUBSCRIBE request which is one of the SIP event reports. FIG.8 shows a specific example of a SUBSCRIBE request used in order to report version information of the client terminal to the version management apparatus. Version information (information relating to the latest file) of the client terminal is described in the Event header field of the SUBSCRIBE request. Specifically, version information is defined by "sip-profile", "profile-name=", "vendor=", "model=" and "version=."

IP call control apparatus 41 receives the SUBSCRIBE request issued from the client terminal, recognizes it is a version report from the description of this Event header field, and accepts the version report (T201). If the client terminal is other than a user registered in address information database 45 of IP call control apparatus 41, acceptance of the version report is denied. When the version report is accepted, IP call control apparatus 41 transmits data of version information to the version management apparatus (T202). In this example, IP call control apparatus 41 and the version management apparatus also communicate using SIP. IP call control apparatus 41 then reports the version information accepted in T201 to the version management apparatus in the form of a SUBSCRIBE request.

The version management apparatus then receives version information transmitted in the form of a SUBSCRIBE request from IP call control apparatus 41 (Q201). The version management apparatus has a version database in which the version information is stored for each client. The received version information is stored in the version database (Q202). When received version information is successfully stored in the version database, the version management apparatus returns a message of version report OK indicating that the version report has been received (Q203). Specifically, 2000K is returned to IP call control apparatus 41.

Upon receiving 2000K from the version management apparatus(T203), IP call control apparatus 41 transmits 2000K to the client terminal of the connection destination (T204).

The client terminal then receives 2000K, confirms completion of the version report (S202), and completes processing for the version report.

In this way, the client terminal connects to the version management apparatus via IP call control apparatus 41 using SIP, and reports the version information of the terminal to the version management apparatus using the SUBSCRIBE request supported by SIP.

Next, the operation for the case where terminal control server 51 issues a download request to the client terminal will be described.

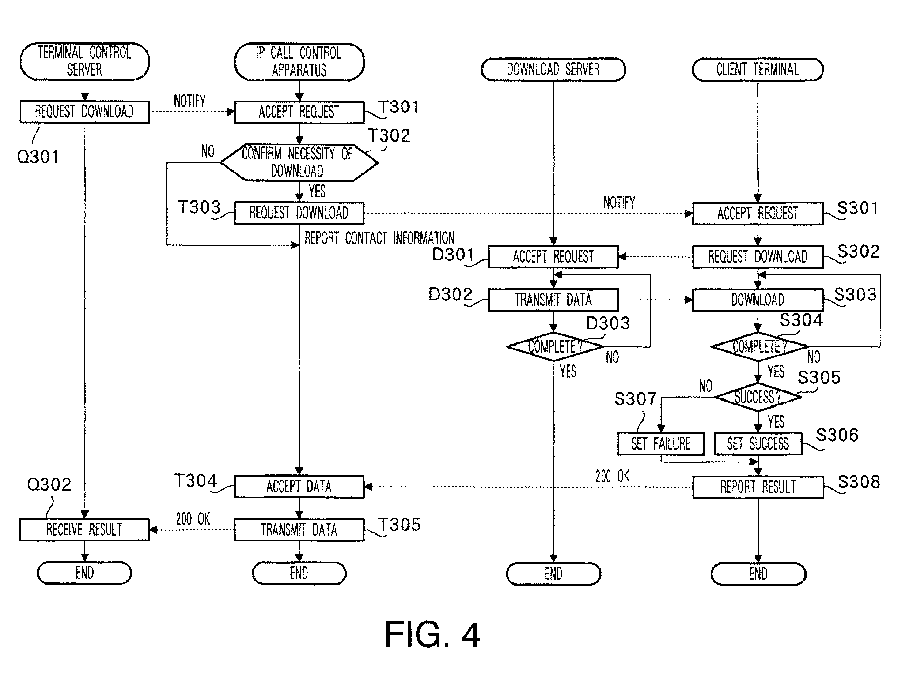

FIG.4 is a sequence diagram where the client terminal downloads data as a result of the download request issued by terminal control server 51 . In this embodiment, a SIP NOTIFY request (SIP message) is used for reporting a download request.

Terminal control server 51 then issues a download request for the client terminal (Q301). The download request is then reported to IP call control apparatus 41 in the form of the NOTIFY request. It is assumed that specific information (for example, user ID) of the client terminal which is the report destination is included in the NOTIFY request.

IP call control apparatus 41 then receives the NOTIFY request from terminal control server 51 and accepts the download request (T301). In this embodiment, IP call control apparatus 41 determines whether or not it is necessary to download new files to the client terminal which is the report destination (T302). When it is determined that it is necessary to download new files, the download request is reported to the client terminal using the NOTIFY request (T303).

For example, terminal control server 51 manages version information of files installed in each client terminal. IP call control apparatus 41 has a version management mechanism. The version management apparatus shown in FIG.3 may take the form of being included in IP call control apparatus 41 or may be located outside and connected every time to the version management apparatus to inquire. The latest version of the client terminal which is a report destination of the download request is acquired by a version management mechanism. The latest version for the client terminal and the version of the download request at this time are compared, and if there is matching, it is determined that downloading is not necessary. In this case, "2000K" is returned to terminal control server 51, and processing is complete. On the other hand, when the version of the download request at this time is later than the latest version for the client terminal, a NOTIFY request reporting the download request is transmitted to the client terminal. FIG.9 shows a specific example of a NOTIFY request used to report the download request to the client terminal. In the Event header field of the NOTIFY request, it is described that there is report of the download request for a file. Further, Multipart/mixed is specified in the Content-Type header field, and the access method (access-type), access valid period (expiration) and address information (URL) relating to the site (download server) storing files to be downloaded to the client terminal are described in the message body.

The client terminal then receives a NOTIFY request from IP call control apparatus 41, recognizes it is the download request report from content described in the Event header field, and accepts this request (S301). The client terminal accepting the request then extracts information required to download the file from the NOTIFY request. In this example, files to be downloaded are stored in download server 61, and download server 61 is set so that the download request from the client terminal has been accepted in HTTP. The client terminal then accesses download server 61 using HTTP using the URL of download server 61 described in the NOTIFY request. The download request which requests the file specified in the NOTIFY request is reported (S302).

Upon accepting the download request from the client terminal (D301), download server 61 transmits data for the specified file to the client terminal of the request source (D302). For example, it is possible to use the protocols such as FTP and HTTP for transferring the file. If transmission of data for the file is complete (D303), download server 61 ends processing.

The client terminal then downloads the file from download server 61 (S303). If the download is complete (S304), it is determined whether or not the download has been successful (S305). When the download is successful, success information is set (S306), and, when the download is failure, failure information is set (S307). Finally, the client terminal reports the results of content set in S306 and S307 to IP call control apparatus 41 (S308). 2000K is returned as result report. In this way, a file is downloaded at the client terminal in response to the download request issued by terminal control server 51.

Upon receiving 2000K in response to the download request reported to the client terminal in T303 (T304), IP call control apparatus 401 recognizes that the download request is accepted, and transmits 2000K to terminal control server 51 (T305).

Upon receiving 2000K in response to the download request reported to IP call control apparatus 41 in Q301 (Q302), terminal control server 51 recognizes that the download request is accepted, and download request processing for the client terminal is complete.

In this way, a download request issued by terminal control server 51 which is outside a firewall as viewed from the client terminal (such as IP telephone 11) is conveyed to the client terminal by IP call control apparatus 41 accommodating this client terminal using a SIP request, so that terminal control server 51 can report the download request to the client terminal over the firewall without having the latest address information and an authentication mechanism for all terminals (including gateways) accommodated in IP control apparatus 41. Therefore, it is possible to simplify the system configuration of terminal control server 51 which functions as a center system and thereby reduce costs.

Next, the operation for the case where terminal control server 41 issues an upload request to the client terminal.

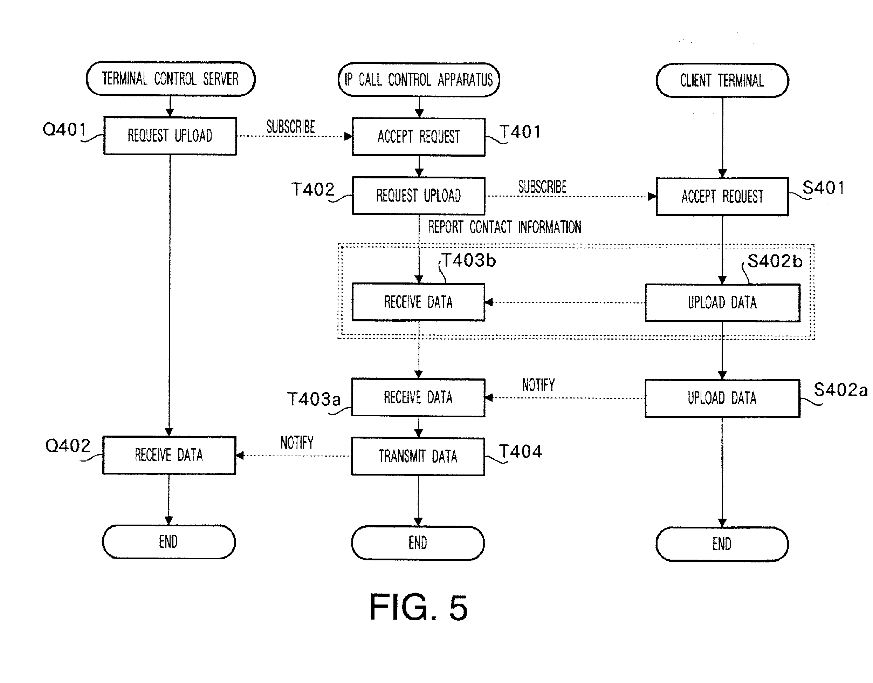

FIG.5 is a sequence diagram where the client terminal uploads data as a result of the upload request issued by terminal control server 51. In this embodiment, a SIP SUBSCRIBE request is used for reporting the upload request. The data to be uploaded is not particularly limited if the data is stored in the client terminal. For example, communication quality information, communication history (logs), control program or environment information may be used.

When the upload of the data stored in the client terminal is requested, terminal control server 51 reports the upload request to IP call control apparatus 41 which accommodates the client terminal (Q401). The upload request is carried out in the form of a SUBSCRIBE request.

IP call control apparatus 41 then receives the SUBSCRIBE request from terminal control server 41 and accepts the upload request (T401). IP call control apparatus 41 then acquires the IP address of the client terminal specified as a report destination from terminal control server 51 from address information database 45 using a user ID contained in the SUBSCRIBE request as a key. If the IP address of the client terminal is stored in address information database 45, it means that the client terminal is accommodated in IP call control apparatus 41. IP call control apparatus 41 then reports the upload request to the client terminal (T402). The upload request is carried out using a SUBSCRIBE request.

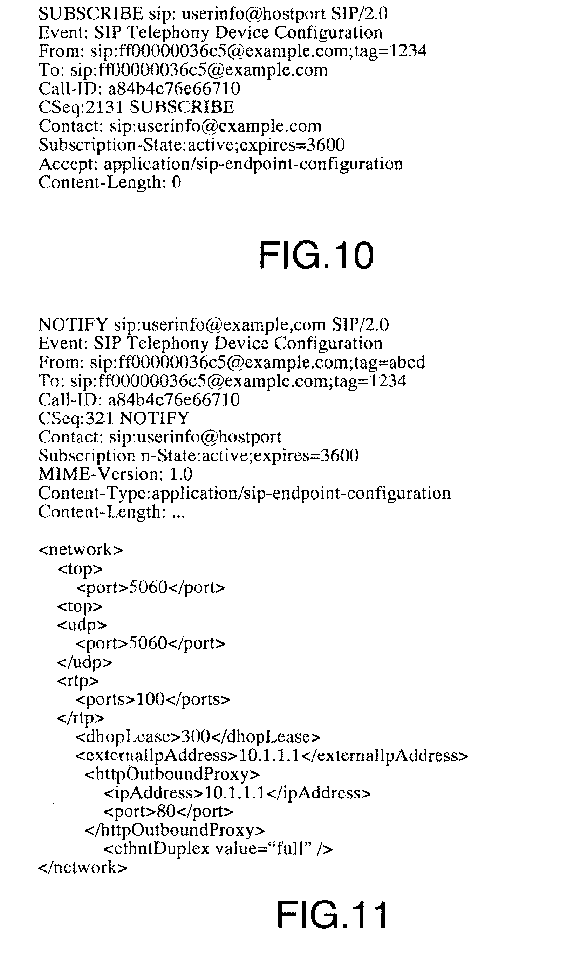

FIG.10 shows a specific example of the SUBSCRIBE request for reporting the upload request to the client terminal from IP call control apparatus 41. The type of data (in this example, terminal setting data) requested for uploading is described in the Event header field of the SUBSCRIBE request. Further, address information for the upload destination (IP call control apparatus) is described in the Contact header field. The client terminal then uploads terminal setting data to IP call control apparatus 41 (S402a). A NOTIFY request is used for reporting terminal setting data requested in the SUBSCRIBE request. FIG.11 shows a specific example of a NOTIFY request from the client terminal to IP call control apparatus 41. The type of data (in this example, terminal setting data) to be reported is described in the Event header field of the NOTIFY request . Further, setting data which is the data body to be uploaded is described in the message body.

IP call control apparatus 41 then receives the NOTIFY request in response to the SUBSCRIBE request transmitted in T402 (T403a). MIME text is then extracted from the received NOTIFY request to acquire terminal setting data, and this terminal setting data is transmitted to terminal control server 51 (T404). The form of the NOTIFY request can also be used for data transmission to terminal control server 51.

Terminal control server 51 then receives the NOTIFY request in response to the SUBSCRIBE request transmitted in Q401 (Q402). Terminal setting data is then extracted from the received NOTIFY request, stored for terminal management use, and upload request processing is complete.

As shown by the dotted line in FIG. 5, if the client terminal uploads data to IP call control apparatus 41 (S402b), it is possible for IP call control apparatus 41 to store and manage the data without transmitting from IP call control apparatus 41 to terminal control server 51 (T403b). For example, the version information of the client terminal is uploaded to IP call control apparatus 41, and, when a download request for a file is received from terminal control server 51, this is used in confirming version information of the client terminal.

Further, it is also possible to provide an upload server different from terminal control server 51 and IP call control apparatus 41 on IP network 30, and directly carry out uploading to the upload server from the client terminal which accepts the upload request. In this case, IP call control apparatus 41 describes an address of the upload server as address information of the upload destination in the SUBSCRIBE request transmitted in T402.

Further, the protocol used in uploading data from the client terminal to IP call control apparatus 41 or the upload server is by no means limited to SIP, and it is also possible to use protocols such as HTTP and FTP.

In this way, an upload request issued by terminal control server 51 which is outside a firewall as viewed from a client terminal is conveyed to the client terminal by IP call control apparatus 41 which accommodates the client terminal using a SIP request, so that terminal control server 51 can report the upload request to the client terminal over the firewall without having the latest address information and an authentication mechanism for all terminals (including gateways) accommodated in IP control apparatus 41. It is also possible so simplify the system configuration of terminal control server 51 which functions as a center system and thereby reduce costs.

Next, the operation for the case of upgrading internal software or environment files of the client terminal using an upgrade request issued by a terminal management server/version management apparatus will be described. In this embodiment, the terminal management server or version management server is described as an example of the apparatus issuing the upgrade request, but other apparatuses are also possible. The terminal management server/version management server is not shown in FIG. 1, but terminal control server 51 may be used or the terminal management server/version management server may be provided on IP network 30. Here, it is assumed that an upgrade request is issued by the terminal management server which is also used as terminal control server 51.

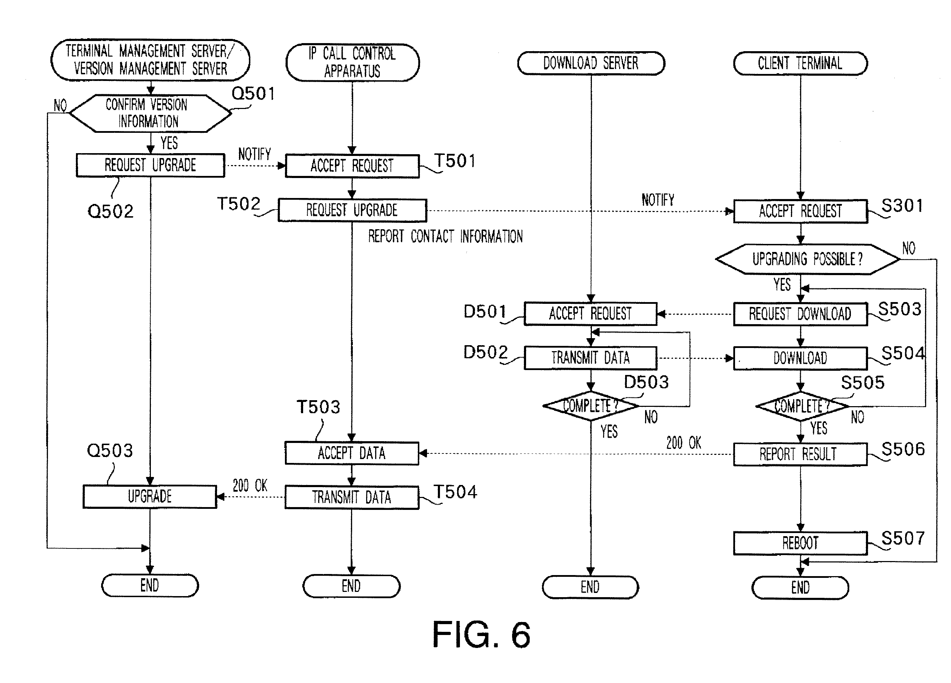

FIG.6 shows a sequence diagram where the client terminal upgrades internal software or environment files using the upgrade request issued by the terminal management server. In this embodiment, a NOTIFY request is used for reporting the upgrade request from IP call control apparatus 41 to the client terminal.

The terminal management server confirms version information of each client terminal which is accommodated in IP call control apparatus 41 (Q501), and, when it is determined to be necessary to upgrade the internal software or environment files, the terminal management server issues an upgrade request (Q502). For example, it is determined whether or not it is necessary to upgrade internal software or environment files from version information transmitted from the client terminal, and, if a client terminal using the old version of internal software or environment files is detected, an upgrade request is issued to the client terminal. The upgrade request can be reported to IP call control apparatus 41 in the form of the NOTIFY request.

IP call control apparatus 41 then accepts the upgrade request reported from the terminal management server (T501). IP call control apparatus 41 then accepts the request, and searches the IP address of the client terminal of the report destination from address information database 45 using the user ID as a key. If address information of the client terminal is registered in address information database 45, the client terminal is an accommodated terminal authenticated by IP call control apparatus 41. If an IP address of the client terminal can be acquired, IP call control apparatus 41 transmits the upgrade request using this IP address as a transmission destination (T502). In this embodiment, the upgrade request reported to the client terminal by IP call control apparatus 41 can be carried out using a NOTIFY request. This NOTIFY request may have the same configuration as that shown in FIG.9. Specifically, in the Event header field of the NOTIFY request, a request for upgrading the internal software or environment files is described, and address information (URL) for a server storing upgrade data and information specifying the upgrade data are described in the message body of the NOTIFY request.

The client terminal then receives the NOTIFY request relating to the upgrade request and accepts the upgrade request (S501), and determines whether or not upgrading is possible (S502). For example, if the software of the upgrade target is in use, it is determined that upgrading is not possible, and processing ends. On the other hand, when it is determined that upgrading is possible, a download request is issued to the server referring to contact information contained in the received NOTIFY request (S503). Contact information is data such as address information (URL) of the server storing the upgrade data and information specifying the upgrade data. In this example, it is assumed that download server 61 shown in FIG.1 is specified in contact information.

After a download request is received from the client terminal, and the request is accepted (D501), download server 61 transmits the requested data (such as internal software or environment files) to the client terminal (D502). If the transmission of all data is complete (D503), the downloading is complete.

The client terminal then receives and stores response data in response to the download request (S504). If the downloading is complete (S505), 2000K is returned to IP call control apparatus 41 in response to the NOTIFY request received in S501 (S506). As a result, it is reported that downloading of the internal software or environment files which are requested to upgrade is complete.

Upon receiving 2000K in response to the NOTIFY request transmitted in T502 (T503), IP call control apparatus 41 replies with 2000K in response to the NOTIFY request received in T501 (T504). As a result, the result in response to the upgrade request is reported to the terminal management server of the request source.

When 2000K is received in response to the NOTIFY request transmitted in Q502 (Q503), the terminal management server has received the result in response to the upgrade request, and a series of processing for the upgrade request is complete.

Next, an example for the case of uploading data stored in a SIP terminal to a server in accordance with an instruction from terminal control server 51.

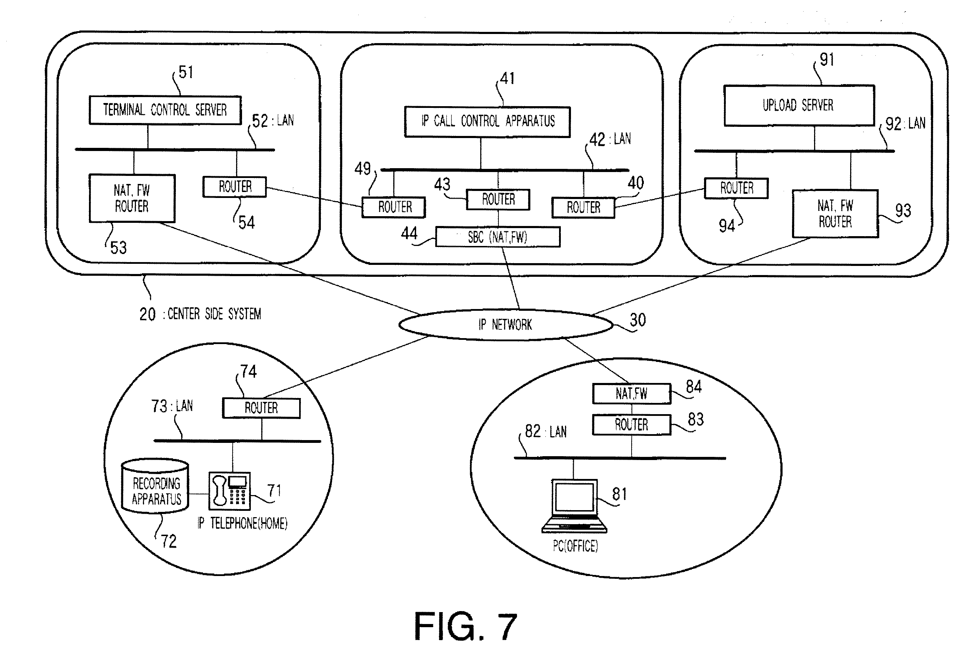

FIG.7 shows a system configuration example for the case where a data file recorded in a message-recording telephone of home is uploaded to the server. Recording apparatus 72 are added to IP telephone 71 of home, and a configuration is adopted where the data file recorded in recording apparatus 72 can be transmitted from IP telephone 71 to IP network 30. IP telephone 71 is connected to LAN 73, and is connectable to IP network 30 via router 74. The user can then access upload server 91 from personal computer (PC) 81 of the office and acquire the recorded data file. PC 81 is connected to LAN 82, and can be connected to IP network 30 via router 83 and gateway 84. Upload server 91 can be configured using a Web server. Upload server 91 is connected to LAN 92, and is connectable to IP network 30 via gateway 93.

In the above configuration, when there is an incoming call to IP telephone 71 of home during a message-recording mode, a message inputted by the caller is converted to recorded phone message data and stored in recording apparatus 72. The data file stored in recording apparatus 72 of IP telephone 71 is then uploaded to upload server 91 as a result of the upload request from terminal control server 51. IP call control apparatus 41 shown in FIG.5 intervenes in this uploading. Specifically, the upload request issued by terminal control server 51 is accepted by IP call control apparatus 41, a SUBSCRIBE request is transmitted to the corresponding IP telephone 71 from IP call control apparatus 41, and the upload request is reported. Upon receiving the SUBSCRIBE request, IP telephone 71 which is the SIP terminal transmits the data file of the recorded phone message data stored in recording apparatus 72 to upload server 91.

On the other hand, the user accesses upload server 91 from PC 81 outside the home, and downloads the data file of the recorded phone message data uploaded from IP telephone 71 of home. It is then possible to listen to content recorded in the message-recording telephone of home by playing back data files of the recorded phone message data downloaded to PC 81.

In this way, recorded phone message data recorded using IP telephone 71 of home can be uploaded to upload server 91 as a result of an upload request issued by terminal control server 51 on the center side, so that it is possible to listen to the content recorded on the message-recording telephone of home from PC 81 outside the home by only providing message-recording function and upload function to IP telephone 71.

The target of upload data uploaded from the SIP terminal is by no means limited to the data described above. For example, it is possible to use various communication recordings (information) of SIP terminal as targets, or use quality of speech information, information as to whether or not speech reaches upon connection, or communication history (logs) as targets.

The present application is based on Japanese Patent Application No.2004-293126, filed on October 5, 2004, entire content of which is expressly incorporated by reference herein.

### Industrial Applicability

The present invention can be applied to a SIP terminal control system capable of reporting a download request, upgrade request and upload request to each terminal from the IP network side without independently having a database for managing the IP address of each terminal or having an authentication mechanism for authenticating each terminal for terminal control.

## Claims

1. A SIP terminal control system, wherein a center system issues a download request for a terminal, an IP call control apparatus which receives the issued download request acquires address information of the terminal from an address information database, and the IP call control apparatus connects to the terminal via an IP network using this address information to report the download request.

2. The SIP terminal control system according to claim 1, wherein the IP call control apparatus connects to the terminal, reports the download request to the terminal, and reports address information of a download server to the terminal, using SIP message.

3. A SIP terminal control system, wherein a center system issues an upload request for a terminal, an IP call control apparatus which receives the issued upload request acquires address information of the terminal from an address information database, and the IP call control apparatus connects to the terminal via an IP network using this address information to report the upload request.

4. The SIP terminal control system according to claim 3, wherein the IP call control apparatus connects to the terminal, reports the upload request to the terminal, and reports address information of an upload destination to the terminal, using SIP message.

5. A SIP terminal control system, wherein a center system issues an upgrade request of internal software or environment files for a terminal, an IP call control apparatus which receives the issued upgrade request acquires address information of the terminal from an address information database, and the IP call control apparatus connects to the terminal via an IP network using this address information to report the upgrade request.

6. The SIP terminal control system according to claim 5, wherein the IP call control apparatus connects to the terminal, reports the upgrade request to the terminal, and reports address information of a download server to the terminal, using SIP message.

7. A recorded phone message data file uploading method, wherein a terminal control server issues an up load request of a recorded phone message data file for an IP telephone, an IP call control apparatus which receives the issued upload request acquires address information of the IP telephone from an address information database, the IP call control apparatus connects to the IP telephone via an IP network using this address information to report the upload request and address information of an upload destination, and the IP telephone which receives this upload request uploads the recorded phone message data file to an upload server specified as the upload destination.

8. A reporting method comprising the steps of:
accepting a download request for a terminal issued by a terminal control server;
acquiring address information of the terminal which is a report destination of the accepted download request from an address information database of accommodated terminals; and
connecting to the terminal via an IP network using this address information to report the download request, using SIP messages.

9. A reporting method comprising the steps of:
accepting an upload request for a terminal issued by a terminal control server;
acquiring address information of the terminal which is a report destination of the accepted upload request from an address information database of accommodated terminals; and
connecting to the terminal via an IP network using this address information to report the upload request, using SIP messages.

10. A reporting method comprising the steps of:
accepting an upgrade request of internal software or environment files for a terminal issued by a management server;
acquiring address information of the terminal which is a report destination of the accepted upgrade request from an address information database of accommodated terminals; and
connecting to the terminal via an IP network using this address information to report the upgrade request, using SIP messages.
